# EUROPEAN PATENT APPLICATION

(11) **EP 3 366 585 A1**
(43) Date of publication of application: **29.08.2018**
(21) Application number: 17756064.6
(22) Date of filing: 25.01.2017
(51) Int. Cl.: B64C 29/00, B64C 27/08, B64C 39/02

(54) **VERTICAL TAKE-OFF AND LANDING AIRCRAFT**

(30) Priority: 26.02.2016 JP 2016035226
(71) Applicant: IHI Corporation, Tokyo 135-8710 (JP)
(72) Inventor: TUNEKAWA Masayoshi, Tokyo 135-8710 (JP); HASEGAWA Masao, Tokyo 135-8710 (JP); TAMURA Tetsuya, Tokyo 135-8710 (JP)
(74) Representative: O'Connor, Dominic David
(86) International application number: PCT/JP2017/002502
(87) International publication number: WO 2017/145622

(57) **Abstract**

A vertical takeoff and landing aircraft 1 includes a pair of ducted fans 3a and 3b adapted to generate lift and thrust, a frame 4 adapted to couple together the ducted fans 3a and 3b, a power source 5 adapted to supply power to the ducted fans 3a and 3b, and legs 6 adapted to support an airframe 2 at the time of landing, in which one 3a (3b) of the ducted fans is inclined tangentially to a rotational direction on the side farther from the other ducted fan 3b (3a) .

## Description

### Technical Field

Embodiments disclosed herein relate to a vertical takeoff and landing aircraft, and more particularly, to a vertical takeoff and landing aircraft having a plurality of ducted fans.

### Background Art

Currently, a representative example of the vertical takeoff and landing aircraft which can generate lift without running on the ground is a helicopter. The helicopter has a large main rotor as compared to an airframe and obtains lift and thrust by rotating the main rotor. Also, anti-torque acting on the airframe by rotation of the main rotor is generally cancelled out using a tail rotor and the like (see, for example, Patent Document 1).

Also, in recent years, an unmanned vertical takeoff and landing aircraft called a drone has been being developed. Such a vertical takeoff and landing aircraft generally obtains lift and thrust by rotating a plurality of rotors. Also, the anti-torque acting on the airframe by rotation of these rotors is cancelled out, for example, by rotating half the rotors in a direction opposite to the other half (see, for example, Patent Document 2).

### Background Art Document

### Patent Document

Patent Document 1: Japanese Patent Laid-Open No. 6-286696
Patent Document 2: Japanese Patent Laid-Open No. 2014-240242

### Summary of the Invention

### Problems to be solved by the Invention

However, with a helicopter-type vertical takeoff and landing aircraft such as described in Patent Document 1, the main rotor is large, and the airframe tends to increase in size to mount the tail rotor and the like. Therefore, if this type of vertical takeoff and landing aircraft performs a takeoff, a landing, or attitude control in a small space in which obstacles such as buildings, trees, and/or the like exist, the main rotor, tail rotor, or the like will touch any of the obstacles. Thus, the vertical takeoff and landing aircraft requires a large space for takeoffs and landings.

Also, with the drone-type vertical takeoff and landing aircraft described in Patent Document 2, a rotational direction of the plurality of rotors has to be controlled in a complicated manner. Also, if power transmitted to the rotors is reversed using a mechanism such as a reversing gear, there are problems in that a structure becomes complicated, that weight of the airframe becomes increased, and so on.

The present disclosure has been made in view of the problems described above and has an object to provide a vertical takeoff and landing aircraft which can reduce an impact of anti-torque acting on an airframe, using a simple structure.

### Means for solving the Problems

The present disclosure provides a vertical takeoff and landing aircraft which includes a plurality of ducted fans in an airframe, in which each of the ducted fans is inclined tangentially to a rotational direction on a side farther from other ducted fans.

Inclination directions of the ducted fans may be perpendicular to a line segment connecting an airframe center located at an equal distance and a shortest distance from rotation centers of the plurality of ducted fans and the rotation center on a plan view of the vertical takeoff and landing aircraft. Also, the airframe may include a power source which supplies power to the ducted fan and an output shaft of the power source may be placed on the airframe center on the plan view of the vertical takeoff and landing aircraft. Furthermore, the plurality of ducted fans may be rotated in a same direction by the power source.

Also, each of the ducted fans may include a control vane with an adjustable angle of attack, the control vane being installed in an outlet portion of the ducted fan. Also, the airframe may include a propulsion device for attitude control.

### Advantageous Effects of the Invention

With the vertical takeoff and landing aircraft according to the present disclosure described above, since each of the ducted fans is inclined tangentially to the rotational direction of a rotating shaft, a component force of thrust is generated in an inclination direction and the component forces generated on each of the ducted fans can generate offset torque which cancels out anti-torque. This eliminates the need to install a tail rotor and the like as with helicopter-type vertical takeoff and landing aircraft and the need to control the rotational directions of the plurality of ducted fans as with drone-type vertical takeoff and landing aircraft, and thus an impact of anti-torque can be reduced using a simple structure.

### Brief Description of the Drawings

FIG. 1A is a plan view of a vertical takeoff and landing aircraft according to a first embodiment of the present disclosure.
FIG. 1B is a front view of the vertical takeoff and landing aircraft according to the first embodiment of the present disclosure.
FIG. 1C is a side view of the vertical takeoff and landing aircraft according to the first embodiment of the present disclosure.
FIG. 2A is a conceptual diagram showing generation of anti-torque in the vertical takeoff and landing aircraft according to the first embodiment of the present disclosure.
FIG. 2B is a conceptual diagram showing generation of component forces of thrust in the vertical takeoff and landing aircraft according to the first embodiment of the present disclosure.
FIG. 2C is a conceptual diagram showing generation of offset torque in the vertical takeoff and landing aircraft according to the first embodiment of the present disclosure.
FIG. 3A is a conceptual plan view showing a first variation of the vertical takeoff and landing aircraft according to the first embodiment of the present disclosure.
FIG. 3B is a conceptual plan view showing a second variation of the vertical takeoff and landing aircraft according to the first embodiment of the present disclosure.
FIG. 4A is a plan view of a vertical takeoff and landing aircraft according to a second embodiment of the present disclosure.
FIG. 4B is a front view of the vertical takeoff and landing aircraft according to the second embodiment of the present disclosure.
FIG. 4C is a side view of the vertical takeoff and landing aircraft according to the second embodiment of the present disclosure.
FIG. 5A is a plan view of a vertical takeoff and landing aircraft according to a third embodiment of the present disclosure.
FIG. 5B is a front view of the vertical takeoff and landing aircraft according to the third embodiment of the present disclosure.
FIG. 5C is a side view of the vertical takeoff and landing aircraft according to the third embodiment of the present disclosure.

### Mode for carrying out the Invention

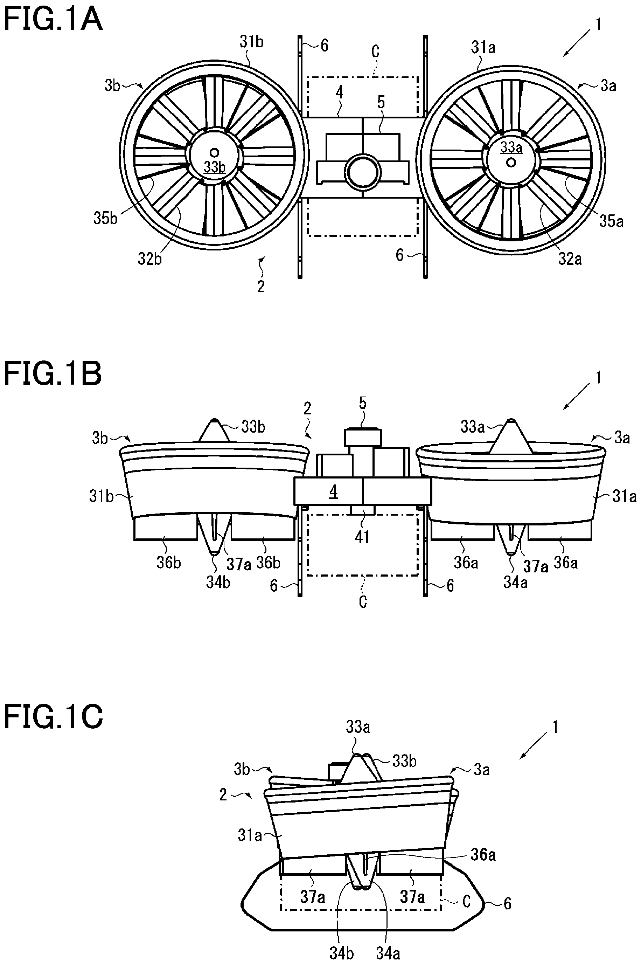

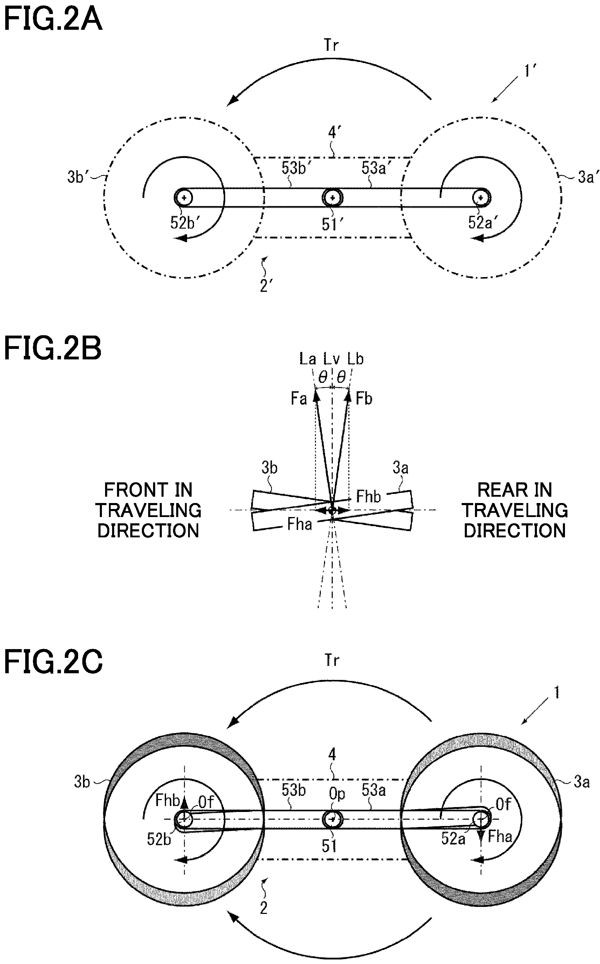

Embodiments of the present disclosure will be described below with reference to FIGS. 1A to 5C. FIGS. 1A to 1C are diagrams showing a vertical takeoff and landing aircraft according to a first embodiment of the present disclosure, where FIG. 1A is a plan view, FIG. 1B is a front view, and FIG. 1C is a side view. FIGS. 2A to 2C are explanatory diagrams showing operation of the vertical takeoff and landing aircraft according to the first embodiment of the present disclosure, where FIG. 2A is a conceptual diagram showing generation of anti-torque, FIG. 2B is a conceptual diagram showing generation of component forces of thrust, and FIG. 2C is a conceptual diagram showing generation of offset torque.

As shown in FIGS. 1A to 2C, the vertical takeoff and landing aircraft 1 according to the first embodiment of the present disclosure is made up of a pair of ducted fans 3a and 3b adapted to generate lift and thrust, a frame 4 adapted to couple together the ducted fans 3a and 3b, a power source 5 adapted to supply power to the ducted fans 3a and 3b, and legs 6 adapted to support an airframe 2 at the time of landing. Note that the airframe 2 is made up of the ducted fans 3a and 3b, frame 4, and accessories (power source 5, legs 6, and the like) thereof.

The ducted fan 3a is placed on the right side of the frame 4 in front view, for example, as shown in FIG. 1B. Also, the ducted fan 3b is placed on the left side of the frame 4 in front view, for example, as shown in FIG. 1B. The ducted fan 3a and ducted fan 3b are coupled integrally by the frame 4 connected therebetween. Then, one 3a (3b) of the ducted fans is inclined tangentially to a rotational direction on the side farther from the other ducted fan 3b (3a) .

The ducted fans 3a and 3b include, for example, substantially cylindrical ducts 31a and 31b, fans 32a and 32b rotatably placed in the ducts 31a and 31b, nose cones 33a and 33b placed upstream of the fans 32a and 32b, tail cones 34a and 34b placed downstream of the fans 32a and 32b, stators 35a and 35b adapted to couple together the ducts 31a and 31b and tail cones 34a and 34b. Note that the ducted fans 3a and 3b are also sometimes referred to as duct fans.

The nose cones 33a and 33b have a function to guide air drawn in by the fans 32a and 32b smoothly into the ducts 31a and 31b. The stators 35a and 35b have a function to regulate the flow of the air led into the ducts 31a and 31b. Also, a power transmission mechanism adapted to transmit power to the fans 32a and 32b from the power source 5 may be placed in some of the stators 35a and 35b. The tail cones 34a and 34b have a function to smoothly guide the air discharged from the ducts 31a and 31b.

Also, the ducted fans 3a and 3b may have control vanes 36a, 36b, 37a, and 37b whose angles of attack are adjustable, the control vanes being provided in outlet portions. The control vanes 36a, 36b, 37a, and 37b are connected to drive shafts (not shown) bridging between the ducts 31a and 31b and the tail cones 34a and 34b, for example, in the outlet portions (on a downstream side of the fans 32a and 32b) of the ducted fans 3a and 3b. Driving sources (e.g., electric motors) of the control vanes 36a, 36b, 37a, and 37b are placed in the tail cones 34a and 34b or the ducts 31a and 31b. The control vanes 36a, 36b, 37a, and 37b are arranged, for example, in a substantially cross-shaped pattern and are made up of a pair of control vanes 36a and 36b pivoted in a front-rear direction of the airframe 2 and a pair of control vanes 37a and 37b pivoted in a left-right direction of the airframe 2.

By pivoting the control vanes 36a, 36b, 37a, and 37b in a desired direction and thereby adjusting the angles of attack, it is possible to adjust directions of the thrust generated by the ducted fans 3a and 3b and control a traveling direction of the airframe 2. Also, the control vanes 36a, 36b, 37a, and 37b may be used not only to adjust the traveling direction of the airframe 2, but also to control an attitude of the airframe 2.

The frame 4 is a member adapted to couple together the pair of ducted fans 3a and 3b and is connected to the ducts 31a and 31b. The frame 4 may be made of either metal or resin. The power source 5 may be placed on a top face of the frame 4. The power source 5 is, for example, an engine driven by fuel. By adopting an engine as a power source 5, it is possible to drive large ducted fans 3a and 3b for a long time and increase a payload (carrying capacity).

Note that the power source 5 may be placed on an underside of the frame 4 or in rear part of the frame 4. Also, the power source 5 is not limited to an engine, and when the fans 32a and 32b are equipped with respective electric motors, the power source 5 may be a battery (e.g., a storage battery, fuel cell, solar cell, or the like) capable of supplying electric power to the electric motors.

Also, a power transmission mechanism adapted to transmit power generated by the power source 5 to the fans 32a and 32b is placed in the frame 4. As shown in FIG. 2C, the power transmission mechanism includes, for example, an output shaft 51 rotated by the power source 5, rotating shafts 52a and 52b placed at centers of the fans 32a and 32b, and belts 53a and 53b looped over the output shaft 51 and rotating shafts 52a and 52b. The belts 53a and 53b are passed through openings formed in the ducts 31a and 31b and into the stators 35a and 35b and looped over the output shaft 51 and rotating shafts 52a and 52b.

Note that the power transmission mechanism is not limited to the illustrated belt transmission mechanism, and may be a gear transmission mechanism using a shaft and bevel gears or a chain transmission mechanism using a chain and sprocket. Also, the power transmission mechanism may include a speed reducer mechanism or speed-up mechanism. Furthermore, when the fans 32a and 32b are equipped with respective electric motors, the power transmission mechanism may be a power cable adapted to supply electric power from the power source 5.

Also, a pair of legs 6 adapted to touch the ground at the time of landing is installed on the underside of the frame 4. Each of the legs 6 is constructed from a plate formed, for example, into a C shape and opposite ends of the leg are connected to the frame 4. The leg 6 forms a ring shape in conjunction with the frame 4, thereby acquiring elasticity and thus a capability to cushion the shock of landing. Note that the legs 6 are not limited to the illustrated configuration, and may be constructed from three or more rod-shaped members or made up of long plates adapted to touch the ground at the time of landing and support members connected to the frame 4.

Also, a connector 41 adapted to support a payload C may be installed on the underside of the frame 4. In FIGS. 1A to 1C, the payload C is illustrated by alternate long and short dash lines for convenience of explanation. The payload C is, for example, photographic equipment such as a camera, surveying equipment, relief supplies, or the like.

Also, a control device (not shown) adapted to control output of the power source 5, rotation speed of the ducted fans 3a and 3b, the angles of attack of the control vanes 36a, 36b, 37a, and 37b, and the like may be placed in the frame 4. The control device may be configured to automatically pilot the vertical takeoff and landing aircraft 1 based on a program inputted in advance or configured to allow the vertical takeoff and landing aircraft 1 to be piloted remotely with a remote control or the like.

Here, a vertical takeoff and landing aircraft 1' shown in FIG. 2A includes ducted fans 3a' and 3b' in which rotating shafts 52a' and 52b' are oriented in a vertical direction. Power is transmitted to the rotating shafts 52a' and 52b' via an output shaft 51' and belts 53a' and 53b'. Now, if both the ducted fans 3a' and 3b' (not shown) are rotated in a same direction (e.g., a clockwise direction in FIG. 2A), anti-torque Tr acts on an airframe 2' in a counterclockwise direction in FIG. 2A as a reaction to the rotation of the ducted fans 3a' and 3b'. Therefore, if no measure is taken, the airframe 2' rotates in the counterclockwise direction in FIG. 2A, making stable flight difficult.

Thus, according to the present embodiment, the ducted fans 3a and 3b are fixed to the frame 4 by being inclined in a predetermined direction. For example, as shown in FIG. 2B, a center line La of the rotating shaft 52a of the ducted fan 3a is inclined forward at an angle of θ to a vertical line Lv. Also, a center line Lb of the rotating shaft 52b of the ducted fan 3b is inclined rearward at an angle of θ to the vertical line Lv. The angle of θ is set to a range in which the airframe 2 will not rotate when the vertical takeoff and landing aircraft 1 is hovering. Specifically, the angle θ is set, for example, within a range of 1 to 10 degrees, and preferably to around 4 to 6 degrees. Note that the inclination angle θ of the rotating shaft 52a of the ducted fan 3a and the inclination angle θ of the rotating shaft 52b of the ducted fan 3b are set to a same value.

Also, in line with the inclination of the rotating shafts 52a and 52b, other members (ducts 31a and 31b, fans 32a and 32b, nose cones 33a and 33b, tail cones 34a and 34b, stators 35a and 35b, etc.) of the ducted fans 3a and 3b are also inclined. Therefore, the ducted fan 3a is inclined forward at an angle of θ to the vertical line Lv and the ducted fan 3b is inclined rearward at an angle of θ to the vertical line Lv. Note that FIG. 2B shows a side view of the ducted fans 3a and 3b whose configurations are conceptualized for convenience of explanation.

In the ducted fan 3a in which the rotating shaft 52a is inclined forward, thrust Fa directed toward upper left in FIG. 2B is generated, generating a component force Fha directed forward. Also, in the ducted fan 3b in which the rotating shaft 52b is inclined rearward, thrust Fb directed toward upper right in FIG. 2B is generated, generating a component force Fhb directed rearward.

If the component forces Fha and Fhb are illustrated on the plan view shown in FIG. 2C, in the ducted fan 3a, the component force Fha is generated in a downward direction in FIG. 2C and in the ducted fan 3b, the component force Fhb is generated in an upward direction in FIG. 2C. The component forces Fha and Fhb generate offset torque Tc which rotates the airframe 2 clockwise in FIG. 2C. Therefore, the offset torque Tc can cancel out anti-torque Tr.

Note that in FIG. 2C, for convenience of explanation, parts showing an inner side of the ducted fans 3a and 3b are filled with dark gray and parts showing an outer side are filled with light gray. Also, although the rotating shafts 52a and 52b are skewed with respect to the output shaft 51, the adoption of the belts 53a and 53b as a power transmission mechanism makes it easy to transmit power. Of course, the power transmission mechanism may be another mechanism (e.g., gear transmission mechanism, chain transmission mechanism, or the like) as long as power can be transmitted between the rotating shafts 52a and 52b and output shaft 51.

As shown in FIG. 2C, it can be said that the ducted fan 3a described above has its rotating shaft 52a inclined tangentially to the rotational direction on the side farther from the other ducted fan 3b (i.e., in the downward direction in FIG. 2C). Also, it can be said that the ducted fan 3b has its rotating shaft 52b inclined tangentially to the rotational direction on the side farther from the other ducted fan 3a (i.e., in the upward direction in FIG. 2C).

Also, on a plan view of the vertical takeoff and landing aircraft 1, if a point located at an equal distance and the shortest distance from rotation centers Of (i.e., centers of the rotating shafts 52a and 52b) of the pair of ducted fans 3a and 3b is defined as an airframe center Op, inclination directions of the ducted fans 3a and 3b are set perpendicular to a line segment OpOf connecting the airframe center Op and rotation centers Of. However, the inclination directions of the ducted fans 3a and 3b are not limited to the directions perpendicular to the line segment OpOf, and can be set as desired as long as the component forces Fha and Fhb can be generated. Also, according to the present embodiment, the output shaft 51 is placed, for example, on the airframe center Op.

By defining the rotation centers Of and airframe center Op in this way on a plan view of the vertical takeoff and landing aircraft 1, the inclination directions of the ducted fans 3a and 3b can be prescribed uniformly without regard to the configuration of the airframe 2. Also, by bringing the output shaft 51 into coincidence with the airframe center Op, a power transmission mechanism of a substantially identical configuration can be adopted for the pair of ducted fans 3a and 3b, making it possible to avoid complicating the power transmission mechanism.

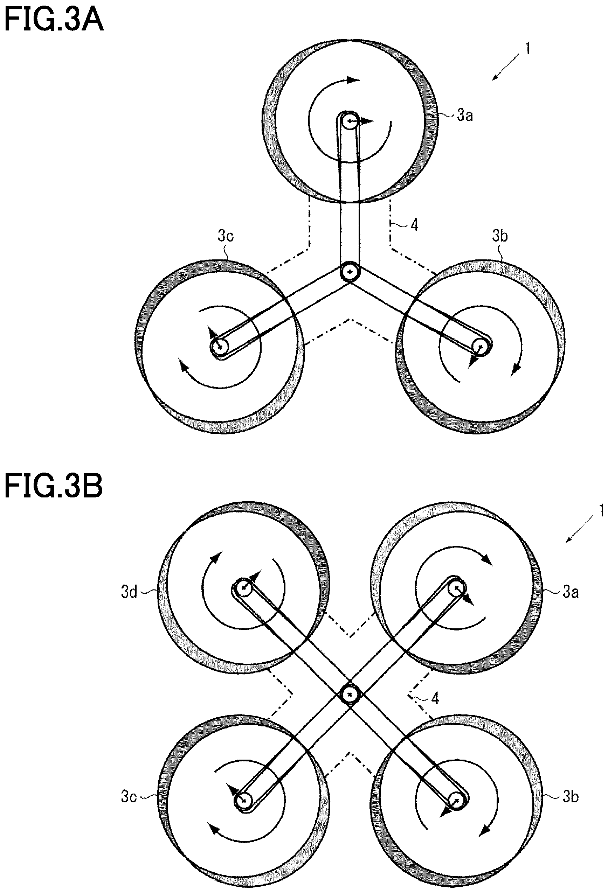

Now, FIGS. 3A and 3B are conceptual plan views showing variations of the vertical takeoff and landing aircraft according to the first embodiment of the present disclosure, where FIG. 3A shows a first variation and FIG. 3B shows a second variation. The first variation shown in FIG. 3A is a vertical takeoff and landing aircraft 1 equipped with three ducted fans 3a, 3b, and 3c. Also, the second variation shown in FIG. 3B is a vertical takeoff and landing aircraft 1 equipped with four ducted fans 3a, 3b, 3c, and 3d. Note that FIGS. 3A and 3B illustrate conceptualized configurations of the airframe 2.

In the vertical takeoff and landing aircraft 1 according to the first variation shown in FIG. 3A, the ducted fan 3a is inclined tangentially to the rotational direction on the side farther from the other ducted fans 3b and 3c, the ducted fan 3b is inclined tangentially to the rotational direction on the side farther from the other ducted fans 3a and 3c, and the ducted fan 3c is inclined tangentially to the rotational direction on the side farther from the other ducted fans 3a and 3b.

By inclining the ducted fans 3a, 3b, and 3c in this way, offset torque can be generated in such a direction as to cancel out anti-torque generated when the ducted fans 3a, 3b, and 3c are rotated clockwise in FIG. 3A. Note that concrete configurations of the ducted fans 3a, 3b, and 3c are substantially identical to the configuration of the ducted fans 3a and 3b according to the first embodiment described above, and thus detailed description thereof will be omitted herein.

In the vertical takeoff and landing aircraft 1 according to the second variation shown in FIG. 3B, the ducted fan 3a is inclined tangentially to the rotational direction on the side farther from the other ducted fans 3b, 3c, and 3d, the ducted fan 3b is inclined tangentially to the rotational direction on the side farther from the other ducted fans 3a, 3c, and 3d, the ducted fan 3c is inclined tangentially to the rotational direction on the side farther from the other ducted fans 3a, 3b, and 3d, and the ducted fan 3d is inclined tangentially to the rotational direction on the side farther from the other ducted fans 3a, 3b, and 3c.

By inclining the ducted fans 3a, 3b, 3c, and 3d in this way, offset torque can be generated in such a direction as to cancel out anti-torque generated when the ducted fans 3a, 3b, 3c, and 3d are rotated clockwise in FIG. 3B. Note that concrete configurations of the ducted fans 3a, 3b, 3c, and 3d are substantially identical to the configuration of the ducted fans 3a and 3b according to the first embodiment described above, and thus detailed description thereof will be omitted herein.

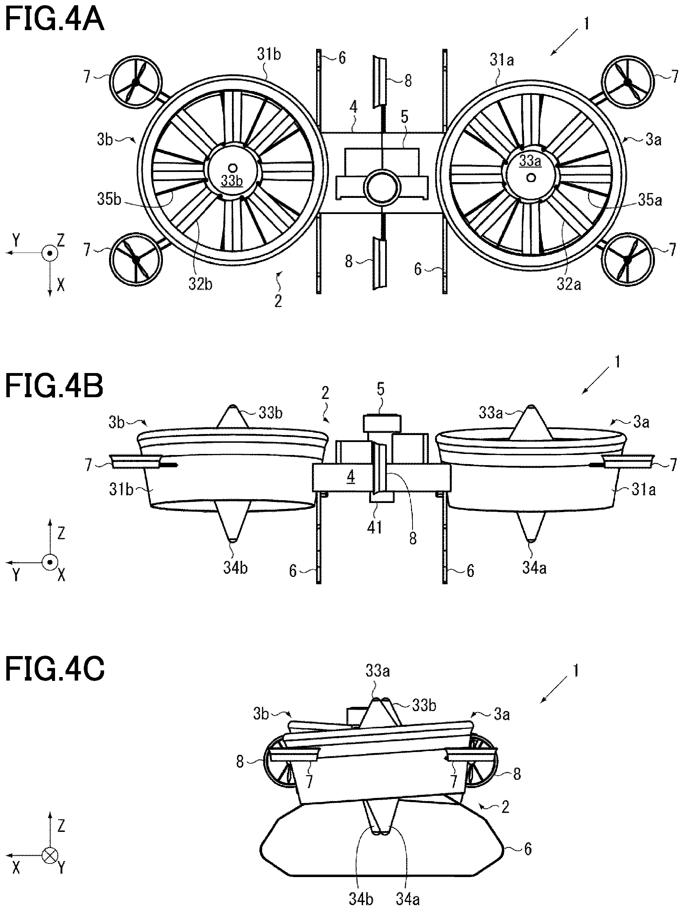

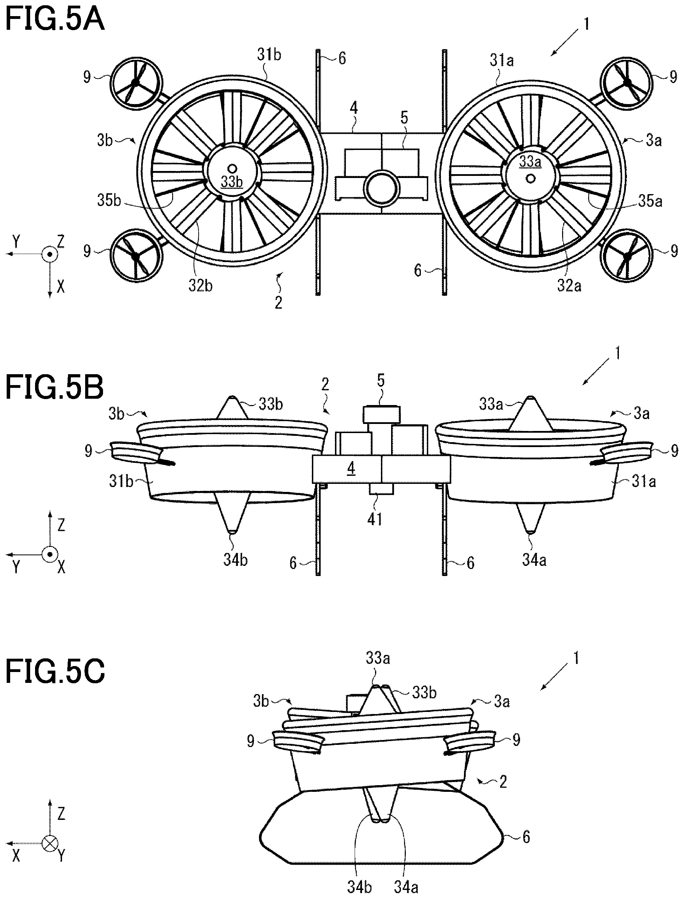

Next, vertical takeoff and landing aircraft 1 according to other embodiments of the present disclosure will be described with reference to FIGS 4A to 5C. FIGS 4A to 4C are diagrams showing a vertical takeoff and landing aircraft according to a second embodiment of the present disclosure, where FIG. 4A is a plan view, FIG. 4B is a front view, and FIG. 4C is a side view. FIGS 5A to 5C are diagrams showing a vertical takeoff and landing aircraft according to a third embodiment of the present disclosure, where FIG. 5A is a plan view, FIG. 5B is a front view, and FIG. 5C is a side view. Note that components in common with the vertical takeoff and landing aircraft 1 according to the first embodiment described above are denoted by the same reference numerals as the corresponding components of the first embodiment, and redundant description thereof will be omitted.

The vertical takeoff and landing aircraft 1 according to the second embodiment shown in FIGS 4A to 4C includes first propulsion devices 7 adapted to control rotational motion (rolling) around an X axis (front-rear axis) of the airframe 2 and rotational motion (pitching) around a Y axis (left-right axis) of the airframe 2, and second propulsion devices 8 adapted to control rotational motion (yawing) around a Z axis (up-down axis) of the airframe 2. The first propulsion devices 7 and second propulsion devices 8 are intended for attitude control of the airframe 2 and are made up, for example, of electric fans. Note that the first propulsion devices 7 and second propulsion devices 8 may be propulsion devices other than electric fans.

The first propulsion devices 7 are placed, for example, in locations corresponding to four corners of the airframe 2. Also, the first propulsion devices 7 are placed in such a way as to be able to generate thrust directed downward in the vertical direction with the airframe 2 held horizontally. By adjusting the thrust of four first propulsion devices 7 appropriately, it is possible to control rolling and pitching as desired.

The second propulsion devices 8 are placed, for example, in front of and behind a central portion of the frame 4. Also, the second propulsion devices 8 are placed in such a way as to be able to generate thrust in a Y direction (left-right direction) with the airframe 2 held horizontally. By adjusting the thrust of the two second propulsion devices 8 appropriately, it is possible to control yawing as desired.

The vertical takeoff and landing aircraft 1 according to the third embodiment shown in FIGS 5A to 5C includes third propulsion devices 9 adapted to control rotational motion (rolling) around the X axis (front-rear axis) of the airframe 2, rotational motion (pitching) around the Y axis (left-right axis), and rotational motion (yawing) around the Z axis (up-down axis). The third propulsion devices 9 are intended for attitude control of the airframe 2 and are made up, for example, of electric fans. Note that the third propulsion devices 9 may be propulsion devices other than electric fans.

The third propulsion devices 9 are placed, for example, in locations corresponding to four corners of the airframe 2. Also, the third propulsion devices 9 are placed in such a way as to be able to generate thrust directed obliquely downward in a direction away from the airframe 2 with the airframe 2 held horizontally. Specifically, the third propulsion device 9 installed in the ducted fan 3a is placed with upper part of the rotating shaft inclined toward the rotation center of the ducted fan 3a and the third propulsion device 9 installed in the ducted fan 3b is placed with upper part of the rotating shaft inclined toward the rotation center of the ducted fan 3b.

By adjusting the thrust of the four third propulsion devices 9 appropriately, it is possible to control rolling, pitching, and yawing as desired. Also, the third embodiment can reduce the number of electric fans for attitude control compared to the second embodiment described above and thereby reduce the weight of the airframe 2.

The vertical takeoff and landing aircraft 1 according to the second embodiment and third embodiment described above do not have control vanes in the outlet portions of the ducted fans 3a and 3b. The vertical takeoff and landing aircraft 1 according to the second embodiment may be designed to control the traveling direction of the airframe 2 by adjusting the directions of the thrust generated by the ducted fans 3a and 3b using the first propulsion devices 7 and second propulsion devices 8. Also, the vertical takeoff and landing aircraft 1 according to the third embodiment may be designed to control the traveling direction of the airframe 2 by adjusting the directions of the thrust generated by the ducted fans 3a and 3b using the third propulsion device 9. Of course, the vertical takeoff and landing aircraft 1 according to the second embodiment and third embodiment may also have control vanes installed in the outlet portions of the ducted fans 3a and 3b.

The vertical takeoff and landing aircraft 1 according to the first embodiment to third embodiment have been described above as being unmanned aircraft, but may be manned aircraft with seats installed on the frame 4.

The present disclosure is not limited to the embodiments described above, and needless to say, various changes can be made without departing from the spirit and scope of the present disclosure.

### Explanation of Reference Signs

1 Vertical takeoff and landing aircraft
2 Airframe
3a, 3b, 3c, 3d Ducted fan
4 Frame
5 Power source
6 Leg
7 First propulsion device
8 Second propulsion device
9 Third propulsion device
31a, 31b Duct
32a, 32b Fan
33a, 33b Nose cone
34a, 34b Tail cone
35a, 35b Stator
36a, 36b, 37a, 37b Control vane
41 Connectors
51 Output shaft
52a, 52b Rotating shaft
53a, 53b Belt

## Claims

1. A vertical takeoff and landing aircraft which includes a plurality of ducted fans in an airframe, wherein
each of the ducted fans is inclined tangentially to a rotational direction on a side farther from other ducted fans.

2. The vertical takeoff and landing aircraft according to claim 1, wherein inclination directions of the ducted fans are perpendicular to a line segment connecting an airframe center located at an equal distance and a shortest distance from rotation centers of the plurality of ducted fans and the rotation center on a plan view of the vertical takeoff and landing aircraft.

3. The vertical takeoff and landing aircraft according to claim 2, wherein the airframe includes a power source which supplies power to the ducted fan and an output shaft of the power source is placed on the airframe center on the plan view of the vertical takeoff and landing aircraft.

4. The vertical takeoff and landing aircraft according to claim 3, wherein the plurality of ducted fans is rotated in a same direction by the power source.

5. The vertical takeoff and landing aircraft according to claim 1, wherein each of the ducted fans includes a control vane with an adjustable angle of attack, the control vane being installed in an outlet portion of the ducted fan.

6. The vertical takeoff and landing aircraft according to claim 1, wherein the airframe includes a propulsion device for attitude control.
